# EUROPEAN PATENT SPECIFICATION

(11) **EP 2 383 682 B1**
(45) Date of publication and mention of the grant of the patent: **17.10.2012**
(21) Application number: 10425137.6
(22) Date of filing: 27.04.2010
(51) Int. Cl.: G06K 19/077

(54) **Vessel with RFID tag**
Gefäß mit RFID-Etikett
Récipient doté d'une étiquette RFID

(43) Date of publication of application: 02.11.2011
(73) Proprietor: Milestone S.r.l., 24010 Sorisole (BG) (IT)
(72) Inventor: Visinoni, Francesco, 24030 Mozzo (BG) (IT); Metzger, Martin, 88316 Isny (DE); Minuti, Matteo, 24053 Brignano Gera d'Adda (BG) (IT)
(74) Representative: Rupp, Christian

(56) References cited:
- US-A1- 2009 115 616

## Description

The present invention relates to a vessel with an RFID tag, to a system for performing sample analysis using said vessel and to a method of manufacturing such a vessel. In particular, the present invention is concerned with a vessel comprising an RFID tag being resistant to the strains of a chemical analysis process for example at high temperatures (up to 300°C) and pressure (up to 60 bar) in a microwave field.

In the field of chemical analysis and treatment of samples, vessels are used into which the samples are filled to undergo the corresponding treatments. Hereby, it is important to uniquely identify each sample within the vessel.

Depending on the processing steps, the microwave transparent vessel and the sample undergo different processes, such as for example addition of chemical reagents, including also aggressive reagents such as acid or the like, heating or submission to microwave radiation. Due to the different chemical processes in which the vessels containing the samples are involved, the possibilities of adding information to the vessels identifying the sample contained within the vessel are very limited. Electric components, transponders or the like are not resistant to the different processes the vessel has to undergo. On the other hand, a tape attached to the vessel indicating the sample might get lost during the analysis process. Writing on the vessel itself is not feasible as the vessel is made of PTFE compounds on which ink or graphite do not stick.

The prior art vessels are therefore limited in terms of ease of use and reliability.

US 2009/0115616 A1 shows an RFID device being enclosed in an enclosure suitable for harsh environments, and is resistant to physical, chemical, temperature, and electromagnetic abuse. The enclosure includes a shell member (rather than a vessel) configured to deflect direct blows to the transponder and can be shaped to fit various types of surfaces to which it can be affixed.

In view of the above, there is thus a need to provide an improved vessel which overcomes at least some limitation of the known processes.

It is therefore the need to provide a vessel allowing an easy, simple and secure identification of samples within the vessel. It is further a need to provide such a vessel with can resist the strains of the chemical analysis process.

Accordingly, this object is achieved by means of the features of the independent claims. The dependent claims develop further the central idea of the invention.

According to a first aspect the present invention relates to a vessel according to claim 1.

According to a second aspect the present invention relates to a system for performing sample analys according to claim 9

According to a further aspect, the present invention relates to a method of manufacturing a vessel according to claim 14

The present invention is further described hereinafter with reference to some of its embodiments shown in the accompanying drawings in which:
fig. 1 depicts a vessel according to the prior art,
fig. 2 schematically depicts an RFID component used in the present invention,
fig. 3a depicts a vertical cross section of a vessel as used in the present invention,
fig. 3b depicts a top view on a vessel as used in the present invention,
fig. 4 depicts a vertical cross section of a vessel with an RFID component according to the present invention,
fig. 5 schematically depicts an RFID writing/reading unit according to the present invention,
fig. 6 shows a system for performing sample analysis according to the present invention, and
fig. 7. shows the process steps of the method for manufacturing a vessel according to the present invention.

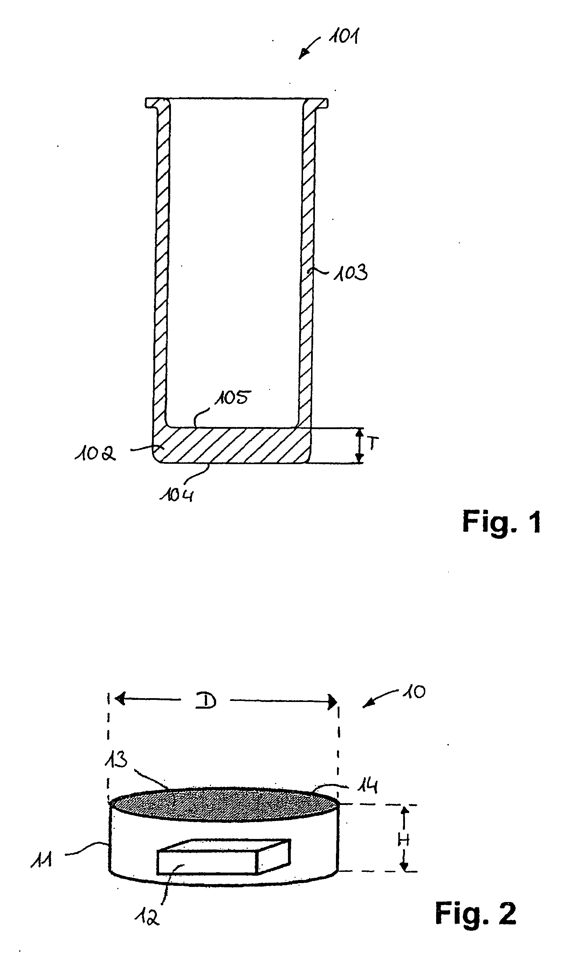

Fig. 1 shows a vessel 101 as known in prior art. The term "vessel" as used in the present specification refers to any type of container adapted to receive a probe or sample therein and to undergo different processing and analysis steps. The vessel is preferably made of a polymer based material (PTFE or others) transparent to microwaves.

Fig. 1 shows a cross section of a vessel 101 according to prior art. The vessel 101 has a cylindrical shape with side walls 103 and a bottom 102. The thickness T of the bottom 102, i. e. extension of the bottom 102 between the underside 104 of the bottom 102 and inner basement 105 according to prior art usually lies within a range of 10 mm.

The vessel 101 according to prior art in order to identify the sample contained therein is usually labeled with a pen or a corresponding tape adhered onto the side wall 103.

However, as already described, this method of marking the sample has a high risk of failure, is uncomfortable and the inscription on the vessel or the tape may be lost, so that a unique identification of the sample contained therein becomes impossible.

The present invention therefore proposes to use a specific vessel comprising a radio frequency identification (RFID) tag. The inventive merit of the present invention lies within the finding how to implement such an RFID tag into a vessel, so that the vessel with the integrated RFID tag will be resistant to all the processing steps of the chemical analysis including and the irradiation of the microwave field.

For this purpose according to the present invention a specifically configured RFID component is used and additionally the vessel is modified in a specific way. Referring to fig. 2 the RFID component 10 as used in the present invention will be explained in detail.

The RFID component 10 comprises a metal housing 11 and an RFID tag 12 provided within the metal housing 11. The metal housing hereby preferably has a cylindrical shape with a diameter D between 3mm and 12mm, preferably of 10mm and a height H between 2mm and 7mm, preferably of 4,5mm. However, the present invention is not limited to a metal housing with a cylindrical shape but can also comprise a metal housing with a cubical shape or the like.

The metal housing 11 has an opening 14 on one of its plane sides and the metal can be filled with a resin 13 embedding the RFID tag 12. However, it is also possible to provide a metal housing 11, which is closed on all sides. Further, the resin 13 can also be omitted or another component instead of resin 13 can be used.

The metal container is made of stainless steel or any other material suitable for shielding microwave radiation and the walls have a maximum thickness of 2 mm.

With this configuration when using a frequency for the RFID communication which is comparatively low, i. e. below 134 kHz, the electromagnetic waves of the RFID communication can pass through the wall of the metal housing 11. On the other hand, due to the metal housing 11 and the specific size of the metal housing the RFID tag is shielded from the electromagnetic radiation of the microwave oven, which usually lies in a much higher range, for example in the range of 2450 MHz.

The diameter D of the metal housing 11 of about 10mm is provides an additional inventive merit of the present invention, since a diameter significantly deviating therefrom would not shield the microwave radiation but rather attenuate it so that the RFID tag 12 within the metal housing 11 would be destroyed.

The RFID component 10 as used in the present invention thus provides the possibility of providing an RFID tag 12 in order to wirelessly communicate with a corresponding RFID reader/writer, but on the other hand provides an RFID component 10 which shields the RFID tag 12 from microwave radiation.

The radio frequency identification, RFID, system as used in the present invention corresponds to common RFID systems, which are widespread and known in the art. A detailed description will therefore not be provided. Generally, the RFID technology allows contactless transmission of data between the transponder, i.e. the RFID tag 12, and the reading and/or writing unit and vice versa. The RFID tag 12 can be an active transponder having an integrated power supply or a passive transponder without an own power supply, which is powered to transmit, receive and/or store data by the electromagnetic field from the RFID reading and/or writing unit. Even though common RFID systems may use any frequency between 30kHz and 3 GHz, the present invention is concerned with RFID systems operating on a frequency range equal to or below 134kHz, e.g. at 125kHz.

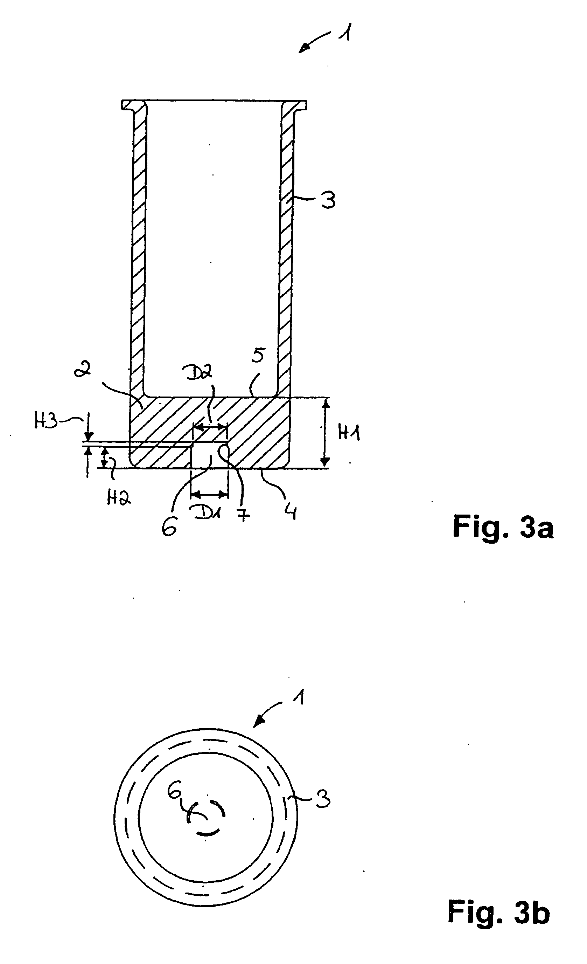

With reference to figs. 3a and 3b now the vessel 1 as used within the present invention will be explained.

Fig. 3a shows a cross section of a vessel 1 as used in the present invention and fig. 3b shows a top view of such a vessel 1.

The vessel 1 preferably has a cylindrical shape, but can also have any other cross-section, such as rectangular, elliptical or the like.

Like the vessel of the prior art, the vessel 1 as used in the present invention comprises a side wall 3 and a bottom 2. The vessel 1 as used in the present invention at its underside 4 of the bottom 2 comprises a recess 6 which is adapted to receive the previously described RFID component 10 therein. The recess thus has substantially the same shape as the RFID component 10, so that the RFID component 10 when inserted into the recess 6 flushes with the inner walls of the recess 6. The term "underside" is intended to refer to the side of the bottom 2 being on the outside of the vessel 1. Generally, the terms "upper" and "lower" when used in the present specification are intended to refer the position of components when the vessel 1 standing in upright position, i.e. in the position in which it is normally used during the processing steps.

Preferably, the height H2 of the recess 6 corresponds to or is larger than the height H of the RFID component 10. In a preferred embodiment the height H2 corresponds to 6 mm. Likewise, the diameter D1 of the recess 6 corresponds to or is larger than the diameter D of the RFID component 10 in order to receive the RFID component 10 therein. In a preferred embodiment the diameter D1 of the recess equals 10mm.

For shielding the RFID component 10 when inserted into the recess 6 from high temperatures of the sample within the vessel 1, the height H 1 of the bottom 2 with respect to the prior art vessel is increased, so that the complete height H1 of the bottom 2 reaching from the underside 4 of the bottom 2 to the inner basement 5 corresponds to at least 20 mm. Thereby, the RFID component 10 due to the amount of bottom material between the RFID component 10 and any heated sample within the vessel 1 is protected from damage due to heat. The vessel 1 according to the present invention with this arrangement is able to sustain temperatures up to 300° without any damage to the RFID component 10.

According to one embodiment the shape of the recess 6 can entirely correspond to the outer shape of the RFID component 10, so that the RFID component 10 at all sides flushes with the walls of the recess 6.

However, in a preferred embodiment, an additional air cavity 7 is provided between the RFID component 10 when inserted into the recess 6 and the bottom 2 below the recess. This air cavity 7 provides an additional isolation from high temperatures developed within the vessel 1. When providing such an air cavity 7 it is thus also possible to use a vessel 1 with a reduced height H1 of the bottom, since the air cavity additionally shields the RFID component 10 from heat within the vessel 1. The air cavity 7 thus can provide an additional temperature shield and/or allows to reduce the material needed for the vessel 1.

In a preferred embodiment the air cavity 7 likewise has a cylindrical shape. Preferably, the diameter D2 of the air cavity 7 is smaller than the diameter D1 of the recess 6, in order to avoid that the RFID component 10 when inserted into the recess 6 slides into the air cavity 7. The diameter D2 preferably corresponds to 9 mm. The height H3 of the air cavity corresponds to 1,5 mm. However, any other shape of the air cavity 7 is possible, e.g. a cubical shape, a spherical or hemispherical shape, a pyramidal shape or the like.

Fig. 3b shows a top view on a vessel 1 as used in the present invention and shows that the recess 6 preferably is provided in the center of the bottom 2, so that the recess 6 in case of a cylindrical vessel 1 is concentrical to the outer shape of the vessel 1. However, any other positioning of the recess at the bottom 2 is possible.

The vessel 1 is made of a material being microwave transparent, heat resistant and acid resistant, such a polymers like polypropylene (PP), polyethylene (PE), polytetrafluoroethylene (PTFE, also known under Teflon®), perfluoroalkoxy (PFA) or any combination derivates thereof.

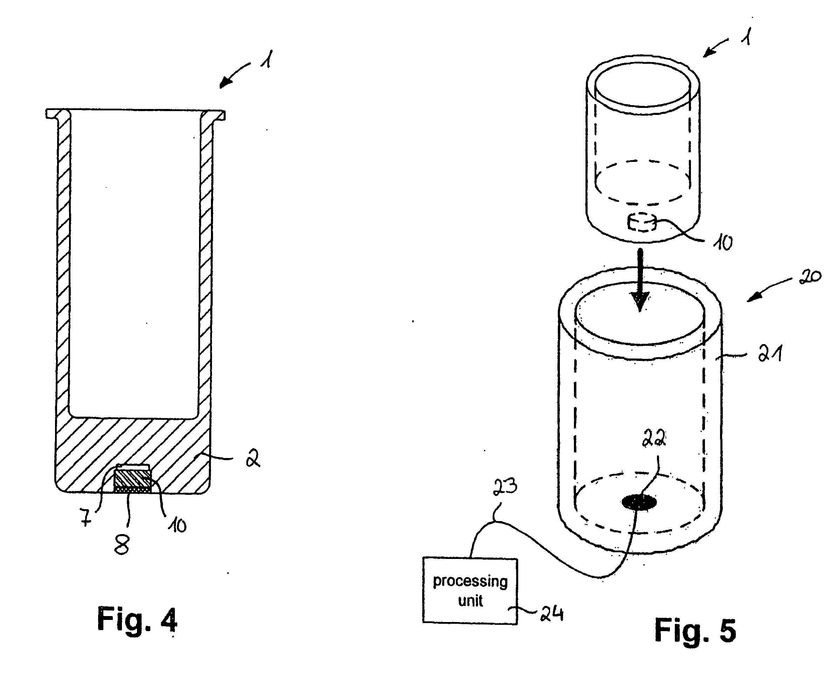

Fig. 4 shows the assembled vessel 1 according to the present invention including the RFID component 10.

The RFID component 10 is inserted into the recess 6. Shown in fig. 4 is the embodiment where an additional air cavity 7 is provided. However, as previously explained, the air cavity 7 can also be omitted.

The recess 6 is sealed with a corrosion protection layer 8, which protects the inserted RFID component 10 from corrosion caused either by high temperatures and/or acid vapors. The corrosion protection layer can comprise polyether ether ketone, polytetrafluoroethylene, other suitable materials adapted to enable a corrosion protection or any combination thereof.

In order to achieve a plain underside 4 of the bottom 2 of the vessel 1, the height H2 of the recess 6 preferably is slightly larger than the height H of the RFID component 10, so that some additional space for the corrosion protection layer 8 is left within the recess 6. When inserting the corrosion protection layer 8 into the recess 6, the corrosion protection layer will flush with the underside 4 of the bottom 2.

In case that the recess 6 is larger than the RFID component 10 and/or has a different shape, the corrosion protection layer 8 can also be used to fill any cavities within the recess 6 except the air cavity 7 and to fix the RFID component 10 within the recess 6.

The vessel 1 with the RFID tag 12 according to the present invention allows using all the advantages and features of an RFID tag 12 including a simple and automatic writing and/or reading of sample related parameters. Further, with the vessel 1 according to the present invention it is ensured that the vessel 1 with the RFID tag 12 will not be destroyed or damaged by any of the subsequent processing steps during the chemical analysis. More specifically, due to the metal housing of the RFID component 10 having a specific diameter D, the RFID tag 12 is shielded from microwave radiation. On the other hand, since as communication frequency for the RFID tag 12 a comparatively low frequency is used, the communication waves of the RFID communication can pass through the metal housing 11 without being interrupted. Further, by providing a bottom 2 of the vessel 1 with an increased thickness compared to prior art vessels, the RFID component 10 is shielded from high temperatures created by the sample within the vessel 1. For example, when a processing step including insertion into a microwave oven is provided, then temperatures up to 300° C can be reached. With an air cavity 7 is provided, an additional temperature shielding is achieved.

In case that a processing step provides the use of acid which is heated, acid vapors may cause damage to the RFID component 10. This is prevented by providing a corrosion protection layer 8 shielding the RFID component 10 from corrosion caused due to temperature and/or acid. On the other hand, the corrosion protection layer 8 does not hinder the propagation of the RFID frequency waves.

For reading from the RFID tag 12 or writing onto the RFID tag 12 any RFID reader/writer suitable for the specification of the RFID tag 12 commonly known can be used. However, according to a preferred embodiment of the present invention, a reading/writing unit is used allowing a simple insertion of the vessel and a secure reading of the RFID tag 12. Such a unit is shown in fig. 5.

Preferably, the RFID reading/writing unit 20 comprises a container 21 having a shape corresponding to the shape of the vessel 1. The vessel 1 thereby can be inserted into the container 21, so that the position of the vessel 1 within the container 21 is fixed. An antenna 22 for reading from the RFID tag 12 and/or writing onto the RFID tag 12 is positioned at the bottom of the container 21, so that when the vessel 1 is inserted into the container 21, the RFID tag 12 is in the vicinity of the antenna 22. Via a corresponding transmission line 23 the signals from the antenna 22 are transmitted to or received from a corresponding processing unit 24. In a preferred embodiment of this invention the antenna 22, the transmission line 23 and the processing unit 24 are located in a single block or component.

However, the present invention is not limited to such a reading/writing unit, but any other commonly known RFID unit adapted to carry out reading and/or writing processes for this RFID tag 12 can be used.

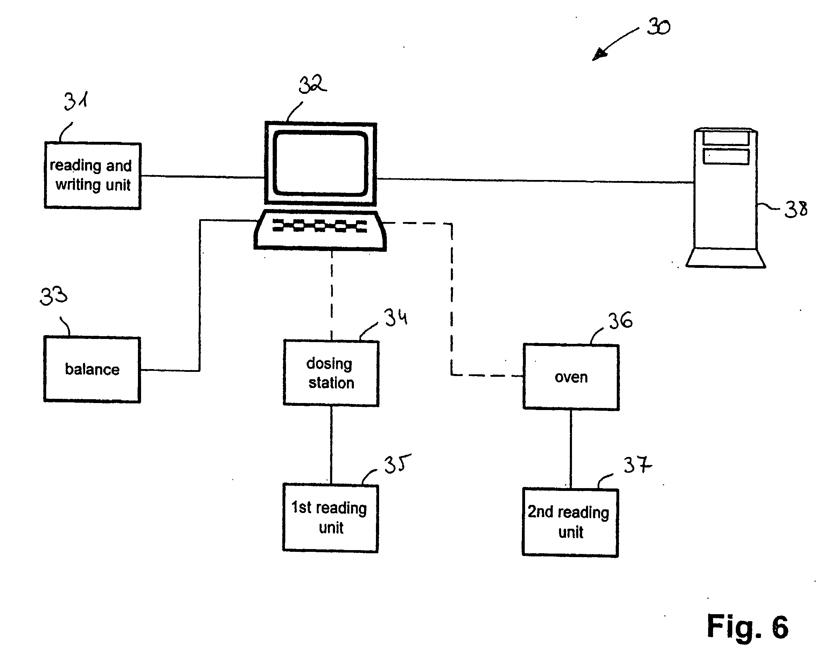

With reference to fig. 6 now a system 30 for performing sample analysis according to the present invention and using the vessel 1 with the RFID tag 12 according to the present invention will be explained in more detail. The present system makes use of the possibilities of an RFID system.

Basically, according to the present invention, sample-related parameters at the beginning of the analysis process can be written onto the RFID tag 12. When the vessel 1 is then moved on to several processing stations for performing a predefined processing step to the sample within the vessel 1, a reading unit either at each processing station or a common reading unit for some or all processing stations is provided, which reads the sample-related parameters and submits the sample-related parameters to the respective processing station, which in turn adapts the processing step accordingly.

The vessel 1 according to the present invention can be used within any type of system making use of RFID communication, however a preferred system 30 will be described with reference to fig. 6.

A writing unit 31 which preferably is a combined reading and writing unit 31 is provided. The reading and writing unit 31 is connected to a central computer 32, which can be operated in the usual manner by a user. A balance 33 for weighing the sample when loaded into the vessel 1 is also provided, which is optionally also connected to the central computer 32.

To make it more clear, at the beginning the user weighs the sample to be analyzed using the balance 33 and preferably the balance 33 transmits the weight to the computer 32. Alternatively, if no connection between the balance 33 and the central computer 32 is present, the user can also manually input the weight into the central computer 32. The user at the computer 32 enters additional sample-related data such as for example sample type, name, batch ID, reagents, quantities thereof, or the like, so that the computer 32 is adapted to collect all data related to the sample including the weight. The RFID tag 12 is then brought in vicinity of the reading and writing unit 31. The information stored in the computer 32 is then submitted to the reading and writing unit 31 and stored on the RFID tag 12. Additionally, all data are also kept stored within the computer 32. It is to be noted, that the unit 31 can also be a pure writing unit without reading functionality.

The vessel 1 with the RFID tag 12 now due to information written onto the RFID tag 12 comprises all information necessary for uniquely identifying the sample therein and further for deciding on the following processing steps.

According to the system 30 of the present invention, at least one processing station is provided for carrying out a predetermined processing step on the sample within the vessel 1. Each processing station is connected to a RFID reading unit, which can read the sample-related data from the RFID tag 12 and submit them to the processing station, which in turn adapts the processing step to the sample, i.e. to the weight, type or the like of the sample.

For example, as a first processing station a dosing station 34 can be provided, which is connected to a first reading unit 35. The vessel 1 is put onto the first reading unit 35, which reads the data from the RFID tag 12 and submits the data to the dosing station 34. On basis of the data, e.g. the type of sample, weight of sample or the like, the dozing station 34 will select type and amount of reagents to be added to the sample. The first reading unit 35 can also be directly integrated into the dosing station.

In a possible implementation, the dosing station 34 can be connected with the computer 32, and submit all the information regarding the processing steps to the computer 32. This has the advantage, that the within the computer 32 all processing steps carried out on the sample can be centrally stored and accessed at any time. However, such a connection is not necessarily present.

A further example of a processing station is an oven 36, for example a microwave labstation which is likewise connected to a second reading unit 37, which alternatively can also be integrated into the oven 36. The second reading unit 37 again reads from the RFID tag 12 sample related parameters and transmits them to the oven 36, which in turn adapts the processing steps accordingly, i.e. the applied radiation power, radiation duration or the like. Optionally, the oven 36 is also connected to the computer 32 and adapted to submit the information regarding the accomplished processing steps to the computer 32.

In a further alternative embodiment, the reading units 35, 37 associated with the processing stations, are combined reading and writing units, so that the processing steps performed by the respective processing stations 34, 36 can be also written on the RFID tag 12. Using the reading and writing unit 31 or any other reading unit, the data on the RFID tag 12 can be read in order to obtain all sample-related data and all processing steps stored thereon.

In a further embodiment a central server 38 or a database can be provided for storing all sample-related data for all samples which have been analyzed. This includes weight and type of sample, a batch ID, amount and type of added reagents, duration and temperature curves of the oven and the like. This makes it easy for a person to recall at any time the complete processing steps for each sample.

Such an easy collection of data and an automatic recognition of the processing steps to be carried out become only possible with a vessel 1 according to the present invention. Only with the vessel 1 according to the present invention a microwave resistant, heat resistant, pressure resistant and corrosion resistant vessel 1 can be provided, which at the same time does not hinder the propagation of the waves for RFID communication.

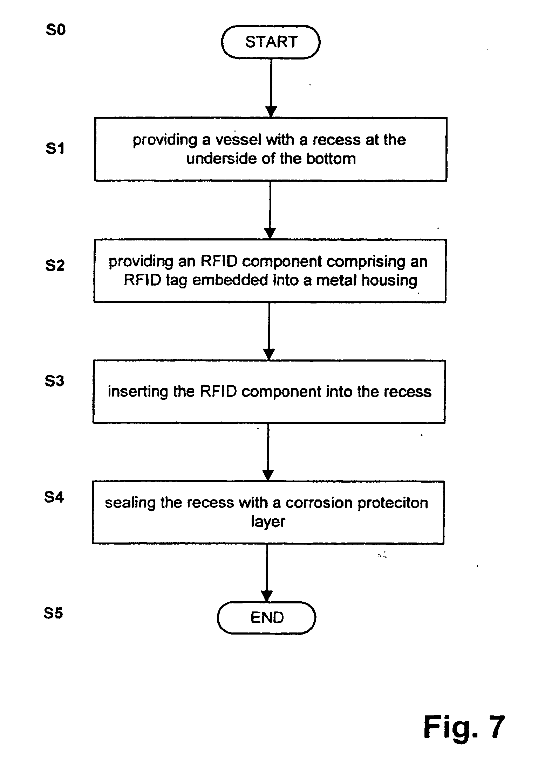

With respect to fig. 7 now the method of manufacturing such a vessel 1 according to the present invention will be explained.

The process starts in step S0.

In step S1 a vessel 1 is provided having a recess 6 at the underside 4 of the bottom 2, wherein said recess 6 and the bottom 2 have the above-described properties. In the next S2 a RFID component 10 comprising a RFID tag 12 embedded into a metal housing 11 is provided having the above-described properties.

In step S3 the RFID component 10 is inserted into the recess 6 and in the next step S4 the recess 6 is sealed with a corrosion protection layer 8.

The process ends in step S5.

With the present invention thus an improved vessel 1 for chemical analysis processes is provided, which allows to simplify the process and to automate process steps, which is results is less errors and a simplified processing. Further, with the present invention data for each sample can be collected and permanently stored in order to be recalled at any time. This allows to easily keeping an overview over all samples all the corresponding processing steps.

## Claims

1. Vessel (1), comprising
a recess (6) at the underside of said vessel (1),
a radio frequency identification component (10) provided within said recess (6), wherein the radio frequency identification component (10) comprises a radio frequency identification tag (12) embedded into a metal housing (11),
wherein the metal housing (11) is made of a material suitable for shielding microwave radiation and has a maximal wall thickness of 2 mm allowing electromagnetic waves of the radio frequency identification communication to pass through, and
a corrosion protection layer (8) for sealing said recess (6),
wherein the bottom (2) of the vessel (1) has a thickness of at least 20mm for shielding the radio frequency identification component (10) from heat emitted by a sample within the vessel (1).

2. Vessel (1) according to claim 1,
wherein the metal housing (11) has a cylindrical shape,
wherein the diameter (D) of the metal housing (11) lies within the range of 3mm to 12mm, preferably equals 10mm and
the height (H) of the metal housing (11) lies within the range of 2mm to 7mm, preferably equals 4,5mm.

3. Vessel (1) according to claim 1 or 2,
wherein said metal housing (11) is made of stainless steel having a maximal thickness of 2mm and/or
wherein said metal housing (11) is open on at least one side or closed on all sides.

4. Vessel (1) according to any of the preceding claims,
wherein said radio frequency identification component (10) further comprises a resin (13) filled into said metal housing (11) and embedding said radio frequency identification tag (12).

5. Vessel (1) according to any of the preceding claims,
wherein the communication frequency of said RFID tag (12) equals or is less than 134 kHZ.

6. Vessel (1) according to any of the preceding claims,
wherein said recess (6) has a cylindrical shape,
wherein the diameter (D1) of the recess (6) equals the lateral dimension of the metal housing (11), and
wherein the height (H2) of the recess (6) is larger than the height (H) of the metal housing (11), preferably equals 6mm.

7. Vessel (1) according to any of the preceding claims,
wherein said corrosion protection layer (8) comprises polyether ether ketone, polytetrafluoroethylene or any combination thereof and/or
wherein said vessel (1) is made of polymers like polypropylene, polyethylene, polytetrafluoroethylene, perfluoroalkoxy or any combinations thereof.

8. Vessel (1) according to any of the preceding claims,
wherein an air cavity (7) is provided between the radio frequency identification component (10) and the upper bottom part surrounding the radio frequency identification component (10).

9. System for performing sample analysis, comprising
a vessel (1) according to any of the preceding claims adapted to receive a sample therein,
a writing unit (31) for writing onto the radio frequency identification component (10) sample related parameters,
at least one processing station (34, 36) for performing a predefined processing step to the sample within the vessel (1), and
at least one radio frequency identification reading unit (35, 37)connected to said at least one processing station (34, 36) for reading the sample related parameters from the radio frequency identification tag (12) and submitting said parameters to the at least one processing station(34, 36),
wherein said processing station (34, 36) adapts the processing step based on the stored sample related parameters.

10. System according to claim 9,
wherein said processing station is a dosing station (34) for adding reagents to the sample, and
wherein the dosing station (34) automatically selects number, type and amount of reagents to be added based on the stored sample-related parameters.

11. System according to claim 9 or 10,
wherein said processing station is a microwave labstation (36) for heating the sample, and
wherein microwave labstation (36) automatically selects the power and duration of microwave radiation based on the stored sample-related parameters.

12. System according to any of claims 9 to 11,
wherein said at least one radio frequency identification reading unit (35, 37) is a combined radio frequency identification reading/writing unit and adapted to write onto the radio frequency identification tag (12) processing data representing the executed process steps.

13. System according to any of claims 9 to 12,
further comprising a database (38) for storing the sample-related data and executed processing steps for each sample.

14. Method of manufacturing a vessel (1),
comprising the steps of
providing (S1) a vessel (1) with recess (6) at the underside (4) of the bottom (2), providing (S2) a radio frequency identification component (10) comprising a radio frequency identification tag (12) embedded into a metal housing (11), wherein the metal housing (11) is made of a material suitable for shielding microwave radiation and has a maximal wall thickness of 2 mm allowing electromagnetic waves of the radio frequency identification communication to pass through,
inserting (S3) the radio frequency identification component (10) into the recess (6), and
sealing (S4) the recess (6) with a corrosion protection layer (8),
wherein the bottom (2) of the vessel (1) has a thickness of at least 20mm for shielding the radio frequency identification component (10) from heat emitted by a sample within the vessel (1).

## Patentansprüche

1. Gefäß (1) mit
einer Vertiefung (6) an der Unterseite des Gefäßes (1),
einem in dieser Vertiefung (6) vorgesehenen "radio frequency identification" RFID Bauteil (10),
wobei das RFID Bauteil (10) ein in ein Metallgehäuse (11) eingebettetes RFID Etikett (12) umfasst,
wobei das Metallgehäuse (11) aus einem zur Abschirmung von Mikrowellenstrahlung geeigneten Material besteht und eine maximale Wandstärke von 2 mm aufweist, die es ermöglicht, dass elektromagnetische Wellen der RFID Datenübertragung durch diese hindurchgehen, sowie
einer Korrosionsschutzschicht (8) zum Abdichten der Vertiefung (6),
wobei der Boden (2) des Gefäßes (1) eine Stärke von mindestens 20mm zum Schutz des RFID Bauteils (10) vor von einer Probe in dem Gefäß (1) abgegebenen Hitze aufweist.

2. Gefäß (1) gemäß Anspruch 1,
wobei das Metallgehäuse (11) eine Zylinderform aufweist,
wobei der Durchmesser (D) des Metallgehäuses (11) im Bereich von 3mm bis 12mm liegt, vorzugsweise gleich 10mm ist, und
die Höhe (H) des Metallgehäuses (11) im Bereich von 2mm bis 7mm liegt, vorzugsweise gleich 4,5mm ist.

3. Gefäß (1) gemäß Anspruch 1 oder 2,
wobei das Metallgehäuse (11) aus rostfreiem Stahl mit einer maximalen Stärke von 2mm besteht und/oder
wobei das Metallgehäuse (11) auf mindestens einer Seite offen oder auf allen Seiten geschlossen ist.

4. Gefäß (1) gemäß einem der vorhergehenden Ansprüche,
wobei das RFID Bauteil (10) weiterhin ein Harz (13) umfasst, das in das Metallgehäuse (11) eingefüllt ist und das RFID Etikett (12) einbettet.

5. Gefäß (1) gemäß einem der vorhergehenden Ansprüche,
wobei die Datenübertragungsfrequenz des RFID Etiketts (12) bei 134 kHz oder darunter liegt.

6. Gefäß (1) gemäß einem der vorhergehenden Ansprüche,
wobei die Vertiefung (6) eine Zylinderform aufweist,
wobei der Durchmesser (D1) der Vertiefung (6) gleich der seitlichen Abmessung des Metallgehäuses (11) ist, und
wobei die Höhe (H2) der Vertiefung (6) größer als die Höhe (H) des Metallgehäuses (11), vorzugsweise gleich 6mm ist.

7. Gefäß (1) gemäß einem der vorhergehenden Ansprüche,
wobei die Korrosionsschutzschicht (8) Polyether-Ether-Keton, Polytetrafluorethylen oder eine Kombination aus diesen umfasst und/oder
wobei das Gefäß (1) aus Polymeren wie Polypropylen, Polyethylen, Polytetrafluorethylen, Perfluoralkoxyl oder beliebige Kombinationen aus diesen besteht.

8. Gefäß (1) gemäß einem der vorhergehenden Ansprüche,
wobei ein Lufthohlraum (7) zwischen dem RFID Bauteil (10) und dem das RFID Bauteil (10) umgebenden, oberen Bodenteil vorgesehen ist.

9. System zur Durchführung einer Probenanalyse, mit
einem Gefäß (1) gemäß einem der vorhergehenden Ansprüche, das zur Aufnahme einer Probe in diesem geeignet ist,
einem Schreibgerät (31) zum Beschriften des RFID Bauteils (10) mit probenspezifischen Parametern,
mindestens einer Verarbeitungsstation (34, 36) zur Durchführung eines vorgegebenen Verarbeitungsschrittes an der Probe in dem Gefäß (1) und
mindestens einem mit mindestens einer Verarbeitungsstation (34, 36) verbundenen RFID Lesegerät (35, 37) zum Auslesen der probenspezifischen Parameter aus dem RFID Etikett (12) und Zuführen der Parameter zu der mindestens einen Verarbeitungsstation (34, 36),
wobei die Verarbeitungsstation (34, 36) den Verarbeitungsschritt auf der Grundlage der gespeicherten, probenspezifischen Parameter anpasst.

10. System gemäß Anspruch 9,
wobei die Verarbeitungsstation eine Dosierstation (34) zum Zusetzen von Reagenzien zu der Probe darstellt, und
wobei die Dosierstation (34) automatisch die Anzahl, Art und Menge von zuzusetzenden Reagenzien auf der Grundlage der gespeicherten, probenspezifischen Parameter auswählt.

11. System gemäß Anspruch 9 oder 10,
wobei die Verarbeitungsstation eine Mikrowellenlaborstation (36) zur Erhitzung der Probe darstellt, und
wobei die Mikrowellenlaborstation (36) automatisch die Energie und die Dauer der Mikrowellenstrahlung auf der Grundlage der gespeicherten, probenspezifischen Parameter auswählt.

12. System gemäß einem der Ansprüche 9 bis 11,
wobei das mindestens eine RFID Lesegerät (35, 37) ein kombiniertes RFID Lese- /Schreibgerät darstellt und zum Beschriften des RFID Etiketts (12) mit Verarbeitungsdaten geeignet ist, die die ausgeführten Verarbeitungsschritte darstellen.

13. System gemäß einem der Ansprüche 9 bis 12,
weiterhin mit einer Datenbank (38) zum Speichern der probenspezifischen Daten und der ausgeführten Verarbeitungsschritte für jede Probe.

14. Verfahren zur Herstellung eines Gefäßes (1)
mit den folgenden Schritten:
Vorsehen (S1) eines Gefäßes (1) mit einer Vertiefung (6) an der Unterseite (4) des Bodens (2),
Vorsehen (S2) eines RFID Bauteils (10) mit einem in einem Metallgehäuse (11) eingebetteten RFID Etikett (12), wobei das Metallgehäuse (11) aus einem zum Abschirmen von Mikrowellenstrahlung geeigneten Material besteht und eine maximale Wandstärke von 2mm aufweist, die es ermöglicht, dass elektromagnetische Wellen der RFID Datenübertragung durch diese hindurchgehen,
Einsetzen (S3) des RFID Bauteils (10) in die Vertiefung (6), sowie Abdichten (S4) der Vertiefung (6) mit einer Korrosionsschutzschicht (8),
wobei der Boden (2) des Gefäßes (1) eine Stärke von mindestens 20mm zum Schutz des RFID Bauteils (10) vor von einer Probe in dem Gefäß (1) abgegebenen Hitze aufweist.

## Revendications

1. Récipient (1), comprenant :
un évidement (6) dans le dessous dudit récipient (1) ,
un composant d'identification radiofréquence (10) prévu dans ledit évidement (6),
dans lequel le composant d'identification radiofréquence (10) comprend une étiquette d'identification radiofréquence (12) intégrée dans un logement métallique (11),
dans lequel le logement métallique (11) est réalisé en un matériau approprié pour bloquer un rayonnement de micro-ondes et a une épaisseur de paroi maximum de 2 mm permettant aux ondes électromagnétiques de la communication d'identification radiofréquence de le traverser, et
une couche anti-corrosion (8) pour sceller ledit évidement (6),
dans lequel le fond (2) du récipient (1) a une épaisseur d'au moins 20 mm pour protéger le composant d'identification radiofréquence (10) de la chaleur émise par un échantillon dans le récipient (1).

2. Récipient (1) selon la revendication 1,
dans lequel le logement métallique (11) a une forme cylindrique,
dans lequel le diamètre (D) du logement métallique (11) est dans la plage de 3 mm à 12 mm, de préférence est égal à 10 mm, et
la hauteur (H) du logement métallique (11) est dans la plage de 2 mm à 7 mm, de préférence est égale à 4,5 mm.

3. Récipient (1) selon la revendication 1 ou 2,
dans lequel ledit logement métallique (11) est réalisé en un acier inoxydable ayant une épaisseur maximale de 2 mm, et/ou
dans lequel ledit logement métallique (11) est ouvert sur au moins un côté ou fermé sur tous les côtés.

4. Récipient (1) selon l'une quelconque des revendications précédentes,
dans lequel ledit composant d'identification radiofréquence (10) comprend en outre une résine (13) remplissant ledit logement métallique (11) et englobant ladite étiquette d'identification radiofréquence (12).

5. Récipien (1) selon l'une quelconque des revendications précédentes,
dans lequel la fréquence de communication de ladite étiquette RFID (12) est égale ou inférieure à 134 kHz.

6. Récipient (1) selon l'une quelconque des revendications précédentes,
dans lequel ledit évidement (6) a une forme cylindrique,
dans lequel le diamètre (D1) de l'évidement (6) est égal à la dimension latérale du logement métallique (11), et
dans lequel la hauteur (H2) de l'évidement (6) est supérieure à la hauteur (H) du logement métallique (11), de préférence est égale à 6 mm.

7. Récipient (1) selon l'une quelconque des revendications précédentes,
dans lequel ladite couche anti-corrosion (8) comprend du polyétheréthercétone, du polytétrafluoroéthylène, ou n'importe quelle combinaison de ceux-ci, et/ou
dans lequel ledit récipient (1) est réalisé en des polymères tels que du polypropylène, du polyéthylène, du polytétrafluoroéthylène, du perfluoroalkoxy, ou n'importe quelles combinaisons de ceux-ci.

8. Récipient (1) selon l'une quelconque des revendications précédentes,
dans lequel une cavité d'air (7) est prévue entre le composant d'identification radiofréquence (10) et la partie de fond supérieure entourant le composant d'identification radiofréquence (10).

9. Système pour effectuer une analyse d'échantillon, comprenant :
un récipient (1) selon l'une quelconque des revendications précédentes conçu pour recevoir un échantillon dans celle-ci,
une unité d'écriture (31) pour écrire sur le composant d'identification radiofréquence (10) des paramètres associés à l'échantillon,
au moins un poste de traitement (34, 36) pour effectuer une étape de traitement prédéfinie sur l'échantillon dans le récipient (1), et
au moins une unité de lecture d'identification radiofréquence (35, 37) connectée audit au moins un poste de traitement (34, 36) pour lire les paramètres associés à l'échantillon à partir de l'étiquette d'identification radiofréquence (12) et soumettre lesdits paramètres audit au moins un poste de traitement (34, 36),
dans lequel ledit poste de traitement (34, 36) adapte l'étape de traitement sur la base des paramètres associés à l'échantillon mémorisés.

10. Système selon la revendication 9,
dans lequel ledit poste de traitement est un poste de dosage (34) pour ajouter des réactifs à l'échantillon, et
dans lequel le poste de dosage (34) sélectionne automatiquement un nombre, un type et une quantité de réactifs à ajouter sur la base des paramètres associés à l'échantillon mémorisés.

11. Système selon la revendication 9 ou 10,
dans lequel ledit poste de traitement est une station de laboratoire hyperfréquence (36) pour chauffer l'échantillon, et
dans lequel la station de laboratoire hyperfréquence (36) sélectionne automatiquement la puissance et la durée d'un rayonnement hyperfréquence sur la base des paramètres associés à l'échantillon mémorisés.

12. Système selon l'une quelconque des revendications 9 à 11,
dans lequel ladite au moins une unité de lecture d'identification radiofréquence (35, 37) est une unité de lecture/écriture d'identification radiofréquence combinée et conçue pour écrire sur l'étiquette d'identification radiofréquence (12) des données de traitement représentant les étapes de processus exécutées.

13. Système selon l'une quelconque des revendications 9 à 12,
comprenant en outre une base de données (38) pour mémoriser des données associées à l'échantillon et les étapes de traitement exécutées pour chaque échantillon.

14. Procédé de fabrication d'un récipient (1),
comprenant les étapes
de fourniture (S1) d'un récipient (1) avec un évidement (6) dans le dessous (4) du fond (2),
de fourniture (S2) d'un composant d'identification radiofréquence (10) comprenant une étiquette d'identification radiofréquence (12) intégrée dans un logement métallique (11), dans lequel le logement métallique (11) est réalisé en un matériau approprié pour bloquer un rayonnement micro-onde et a une épaisseur de paroi maximale de 2 mm permettant aux ondes électromagnétiques de la communication d'identification radiofréquence de le traverser,
d'insertion (S3) du composant d'identification radiofréquence (10) dans l'évidement (6), et
de scellement (S4) de l'évidement (6) avec une couche anti-corrosion (8),
dans lequel le fond (2) du récipient (1) a une épaisseur d'au moins 20 mm pour protéger le composant d'identification radiofréquence (10) de la chaleur émise par un échantillon dans le récipient (1).
